(19) Europäisches Patentamt
European Patent Office
Office européen des brevets

(11) **EP 2 308 167 B1**

(12) **FASCICULE DE BREVET EUROPEEN**

(45) Date de publication et mention de la délivrance du brevet:
**09.11.2016 Bulletin 2016/45**

(21) Numéro de dépôt: **09745964.8**

(22) Date de dépôt: **17.04.2009**

(51) Int Cl.:
*H02P 9/06* (2006.01)       *H02J 7/32* (2006.01)
*H02P 9/00* (2006.01)       *H02K 35/00* (2006.01)

(86) Numéro de dépôt international:
**PCT/FR2009/050722**

(87) Numéro de publication internationale:
**WO 2009/138645 (19.11.2009 Gazette 2009/47)**

(54) **DISPOSITIF MECATRONIQUE PORTABLE DE GENERATION D'ENERGIE ELECTRIQUE**

TRAGBARE MECHATRONISCHE ANORDNUNG ZUR ERZEUGUNG VON ELEKTRISCHEM STROM

PORTABLE MECHATRONIC DEVICE FOR GENERATING ELECTRIC POWER

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **22.04.2008 FR 0852697**

(43) Date de publication de la demande:
**13.04.2011 Bulletin 2011/15**

(73) Titulaire: **Orange**
**75015 Paris (FR)**

(72) Inventeurs:
• **SADARNAC, Daniel**
**F-87110 Solignac (FR)**

• **MARQUET, Didier**
**F-92240 Malakoff (FR)**

(74) Mandataire: **Regimbeau**
**20, rue de Chazelles**
**75847 Paris Cedex 17 (FR)**

(56) Documents cités:
**EP-A- 1 231 706**       **US-A- 3 778 697**
**US-A1- 2003 020 281**       **US-A1- 2004 222 708**

Remarques:
Le dossier contient des informations techniques présentées postérieurement au dépôt de la demande et ne figurant pas dans le présent fascicule.

**EP 2 308 167 B1**

## Description

La présente invention concerne un procédé et un dispositif de génération d'énergie électrique fondé sur la récupération d'énergie du déplacement oscillatoire naturel d'un système présentant des accélérations suivant des sens opposés. Le système à déplacement oscillatoire naturel est par exemple un marcheur portant un boîtier du dispositif accroché à sa ceinture.

L'article *"Electromagnetic resonant generator"* de M. Ruellan, S. Turri, Hamid Ben Ahmed and B. Multon, IEEE IAS annual meeting, Hong Kong, CDROM proc., 2-6 oct 2005, divulgue un dispositif de génération d'énergie électrique comprenant un actionneur électromagnétique linéaire synchrone à structure tubulaire dont l'inducteur à aimants permanents est fixé à un boîtier et dont l'induit est fixé à une partie massive mobile couplée au boîtier par des ressorts d'amortissement. L'induit est relié électriquement à un moyen de stockage d'énergie électrique. Un boîtier du dispositif est porté au niveau de la hanche d'un marcheur dont le mouvement est considéré sensiblement sinusoïdal. L'actionneur est passif par rapport à la partie massive mobile et ne fonctionne qu'en générateur électrique pour recharger par exemple le moyen de stockage d'énergie électrique, par exemple la batterie d'un téléphone cellulaire. L'énergie récupérée augmente avec la fréquence des pas du marcheur.

Pour les mouvements naturels tels que ceux du corps humain, les oscillations sont à basse fréquence. Dans ces conditions, l'énergie récupérable par le dispositif de génération selon l'article ci-dessus est très faible. Ainsi, avec un tel dispositif de génération électromagnétique porté à la hanche par un marcheur, la puissance moyenne pouvant être récupérée est inférieure à 40 mW pour une partie massive mobile de 50 g et une cadence de deux pas à la seconde.

Un générateur électrique autonome comprenant un alternateur linéaire composé d'un aimant et d'une bobine flottant à la surface de l'eau est décrit dans la demande de brevet US 2003/0020281 A1. L'aimant se déplace alternativement autour de la bobine suivant les ondulations de l'eau. L'énergie mécanique est récupérée sous la forme d'un courant dans la bobine. Afin de maximiser la puissance électrique délivrée à une charge telle qu'une batterie rechargeable, un contrôleur minimise constamment le rapport d'un paramètre dynamique mesuré, tel que la vitesse relative entre l'aimant et la bobine mesurée, sur la puissance électrique afin d'imposer via un contrôleur de courant une valeur de courant dans la bobine inversement proportionnelle à la vitesse relative et par conséquent afin d'imposer un courant nécessaire aux besoins de la charge, quelles que soient les oscillations de la surface de l'eau. Le fonctionnement de ce générateur électrique n'est pas cyclique et le courant circulant dans la bobine dépend constamment des besoins en puissance électrique de la charge.

Par ailleurs, un générateur électrique du type machine tournante synchrone comprenant un disque supportant des bobines passant devant des aimants et animé d'un déplacement oscillant rotatif est divulgué dans la demande de brevet US 2004/0222708°A1.

La présente invention pallie les inconvénients évoqués ci-dessus par un procédé de génération d'énergie électrique au moyen d'un actionneur relié électriquement à un moyen de stockage d'énergie électrique et comportant un premier élément apte à être soumis à un déplacement à vitesse oscillatoire et un deuxième élément constituant au moins en partie une partie massive apte à osciller en vitesse par rapport au premier élément.

Un tel procédé comprend un asservissement du déplacement de la partie massive au déplacement oscillatoire du premier élément pour commander l'actionneur en générateur chargeant le moyen de stockage pendant une partie d'un cycle de fonctionnement de l'actionneur, la partie massive se déplaçant librement pendant une autre partie du cycle de fonctionnement de l'actionneur.

Les premier et deuxième éléments sont par exemple un induit périphérique et un inducteur central de l'actionneur de type machine tournante synchrone à aimants. Sur des machines plus grosses, les aimants peuvent être remplacés par des électroaimants.

L'actionneur selon l'invention est destiné à générer de l'énergie électrique, par exemple pour recharger la batterie d'un objet portable, et fonctionne alors en générateur pour charger le moyen de stockage d'énergie électrique à connecter à la batterie de l'objet portable. La partie massive peut alors se déplacer librement pendant une autre partie du cycle de fonctionnement de l'actionneur.

L'invention concerne également un procédé de génération d'énergie électrique au moyen d'un actionneur relié électriquement à un moyen de stockage d'énergie électrique et comportant un premier élément apte à être soumis à un déplacement à vitesse oscillatoire et un deuxième élément constituant au moins en partie une partie massive apte à osciller en vitesse par rapport au premier élément.

Ce procédé est particulier en ce qu'il comprend :

- un asservissement du déplacement de la partie massive au déplacement oscillatoire du premier élément pour commander l'actionneur en générateur chargeant le moyen de stockage pendant une partie d'un cycle de fonctionnement de l'actionneur,
- un asservissement du déplacement de la partie massive au déplacement oscillatoire du premier élément pour commander l'actionneur en moteur alimenté par le moyen de stockage pendant une autre partie du cycle de fonc-

2

tionnement de l'actionneur.

Pour récupérer le plus d'énergie électrique possible depuis le système à déplacement oscillatoire naturel, tel qu'un marcheur portant l'actionneur avec la partie massive, le fonctionnement de l'actionneur est réversible afin qu'une autre partie du cycle de fonctionnement de l'actionneur puisse comprendre un asservissement du déplacement de la partie massive au déplacement oscillatoire du premier élément pour commander l'actionneur en moteur alimenté par le moyen de stockage. Dans ce cas, l'actionneur fonctionne soit en moteur pour accélérer la partie massive, soit en générateur pour récupérer l'énergie cinétique de la partie massive, suivant l'asservissement au déplacement oscillatoire du premier élément qui est soumis à celui du système oscillatoire naturel. Cet asservissement permet de récupérer beaucoup plus d'énergie qu'au moyen de l'actionneur passif selon la technique antérieure.

En particulier, l'asservissement peut être réalisé en imposant que la vitesse de déplacement de la partie massive soit asservie à l'accélération du premier élément.

Grâce à cet asservissement, le procédé de l'invention contribue à tirer le plus d'énergie possible du système en mouvement, tout en assurant peu de gêne au marcheur à cause du poids, des vibrations et du bruit qui pourraient être engendrés par l'actionneur. Plus le débattement de la partie massive est grand et/ou plus des accélérations fortes lui sont imposées, plus l'énergie à récupérer est élevée, d'autant plus que le mouvement oscillatoire du système oscillatoire naturel est lent.

Le procédé assiste un prélèvement d'énergie sur un système en mouvement lent par nature, par la mise en oeuvre de mouvements artificiels de la masse mobile plus rapide pour recharger le moyen de stockage d'énergie électrique tel qu'un micro-accumulateur par exemple alimentant un terminal mobile cellulaire. A cet égard, le cycle de fonctionnement de l'actionneur peut comprendre une phase de fonctionnement de l'actionneur en moteur pour augmenter la vitesse de déplacement de la partie massive suivant un sens prédéterminé pendant une augmentation de l'accélération du premier élément suivant un sens opposé au sens prédéterminé, une phase de fonctionnement de l'actionneur en générateur pour diminuer la vitesse de déplacement de la partie massive suivant le sens prédéterminé pendant une diminution de l'accélération du premier élément suivant le sens opposé, une phase de fonctionnement de l'actionneur en moteur pour augmenter la vitesse de déplacement de la partie massive suivant le sens opposé pendant une augmentation de l'accélération du premier élément suivant le sens prédéterminé, et une phase de fonctionnement de l'actionneur en générateur pour diminuer la vitesse de déplacement de la partie massive suivant le sens opposé pendant une diminution de l'accélération du premier élément suivant le sens prédéterminé.

La variation imposée de la vitesse de la partie massive en fonction du temps peut être par exemple sensiblement sinusoïdale, trapézoïdale, ou de même type que l'accélération du boîtier.

Pour mieux optimiser la récupération d'énergie par le moyen de stockage d'énergie électrique, la vitesse de déplacement de la partie massive quel que soit son sens peut être maintenue en synchronisme avec des maximums en valeur absolue de l'accélération de l'inducteur. En d'autres termes, le cycle de fonctionnement de l'actionneur peut comprendre des phases de fonctionnement de l'actionneur en moteur pour augmenter et diminuer la vitesse de déplacement de la partie massive lorsque l'accélération du premier élément varie autour d'un maximum.

L'invention a aussi pour objet un dispositif de génération d'énergie électrique comprenant un actionneur relié électriquement à un moyen de stockage d'énergie électrique et comportant un premier élément apte à être soumis à un déplacement à vitesse oscillatoire et un deuxième élément constituant au moins en partie une partie massive apte à osciller en vitesse par rapport au premier élément. Le dispositif est caractérisé en ce qu'il comprend un moyen d'asservissement pour commander l'actionneur en générateur chargeant le moyen de stockage, en asservissant le déplacement de la partie massive au déplacement oscillatoire du premier élément pendant une partie d'un cycle de fonctionnement de l'actionneur.

Le moyen d'asservissement est aussi apte à commander l'actionneur en moteur alimenté par le moyen de stockage pendant une autre partie du cycle de fonctionnement de l'actionneur. Selon une variante plus économique et capable de moins générer d'énergie électrique, l'actionneur n'est pas alimenté et la partie massive peut se déplacer librement pendant l'autre partie du cycle de fonctionnement de l'actionneur.

Plus particulièrement, le moyen d'asservissement peut comprendre un moyen pour mesurer une accélération du premier élément, un moyen pour mesurer une vitesse de déplacement de la partie massive, et un moyen commandant l'actionneur pour asservir la vitesse de déplacement de la partie massive à l'accélération du premier élément. Le moyen pour asservir peut comprendre un moyen pour corriger un paramètre dépendant de l'accélération mesurée du premier élément et de la vitesse de déplacement mesurée de la partie massive par rapport à une consigne variable dépendant de la position du premier élément, et un amplificateur-onduleur réversible pour adapter les variations de l'énergie électrique tantôt à récupérer de l'actionneur et tantôt à fournir à l'actionneur aux courant et tension continues aux bornes du moyen de stockage selon le paramètre corrigé.

Différentes combinaisons du déplacement de la partie massive et du type d'actionneur peuvent contribuer à réaliser le dispositif de l'invention. Selon une première réalisation, le déplacement de la partie massive est linéaire tandis que l'actionneur est linéaire ou tournant. L'oscillation naturelle dont on veut prélever de l'énergie peut être verticale ou orientée selon une autre direction.

Selon une deuxième réalisation, le déplacement de la partie massive est rotatif et l'actionneur est tournant. Dans cette deuxième réalisation, le moyen d'asservissement peut être apte à faire varier la vitesse de déplacement de la partie massive autour d'une vitesse nominale plus élevée que la vitesse angulaire maximale du premier élément afin de prélever plus d'énergie. Dans cette deuxième réalisation, pour améliorer le confort du marcheur, le premier élément de l'actionneur peut être supporté par un boîtier fixé au système à déplacement oscillatoire naturel et découplé en rotation du premier élément par exemple par un moyen de découplage tel qu'au moins un roulement à billes.

Pour mieux assister l'actionneur au prélèvement d'énergie sur le système à déplacement oscillatoire naturel et accroître la miniaturisation du dispositif, ce dernier peut comprendre un moyen élastique fixé à un boîtier supportant l'actionneur pour assister l'actionneur à accélérer la partie massive lorsque l'actionneur fonctionne en moteur. L'asservissement de la partie massive et du moyen élastique peut alors porter non seulement sur la vitesse de déplacement de la partie massive, mais aussi sur la raideur du moyen élastique et/ou sur le déplacement de masselottes mobiles par exemple sur une tige diamétrale à l'axe de l'actionneur.

Un réglage du moment d'inertie de la partie massive en mouvement peut également se faire par déplacement d'un liquide par rapport à l'axe de rotation, tandis que le moyen élastique peut lui-même être réalisé grâce à un fluide compressible dont on règle la raideur en agissant sur sa pression.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est une vue en coupe axiale schématique d'un dispositif de génération d'énergie électrique selon la première réalisation de l'invention ;
- la figure 2 est un bloc-diagramme d'un asservissement de la vitesse de rotation de l'inducteur d'un actionneur tournant selon une variante de la première réalisation ;
- la figure 3 comprend six graphes relatifs aux positions de déplacements sinusoïdaux d'un boîtier et d'une partie massive du dispositif de génération d'énergie électrique et de leurs vitesses et accélérations en fonction du temps ;
- la figure 4 montre une variation optimale de la vitesse de la partie massive asservie selon l'invention à une accélération sinusoïdale du boîtier ;
- les figures 5 et 6 sont des vues schématiques en perspective et de face d'un actionneur tournant dans un dispositif de génération d'énergie électrique selon une deuxième réalisation de l'invention ;
- la figure 7 est une vue en coupe axiale du dispositif de génération d'énergie électrique selon la deuxième réalisation ;
- la figure 8 est un bloc-diagramme d'un asservissement de la vitesse de rotation de l'inducteur de l'actionneur tournant selon la deuxième réalisation ;
- la figure 9 est analogue à la figure 1, mais avec un ressort de compression selon une variante de la première réalisation ; et
- la figure 10 montre un ressort en spirale pour une variante de la deuxième réalisation.

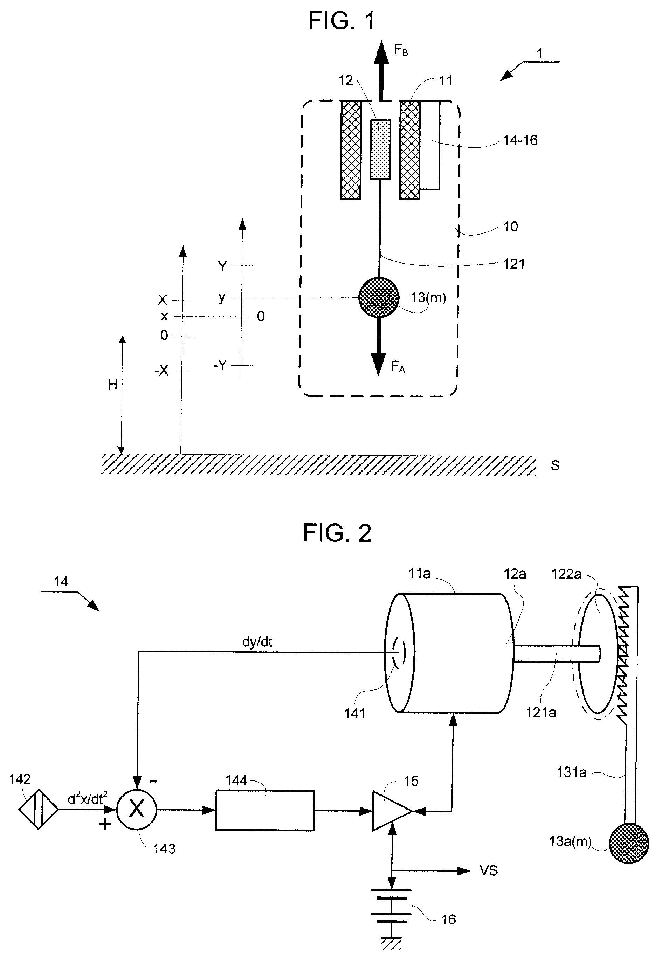

En référence aux figures 1 et 2, un dispositif mécatronique de génération d'énergie électrique 1 selon la première réalisation de l'invention comporte un boîtier 10 qui renferme un actionneur électromagnétique 11-12, une partie massive mobile 13 et un circuit électrique 14-16. Les principaux composants du circuit électrique sont un asservissement électronique 14 commandant l'actionneur, un amplificateur-onduleur réversible 15 et un dispositif de stockage d'énergie électrique miniature 16 tel qu'un accumulateur ou un super-condensateur.

L'actionneur 11-12 est réversible. Sous la commande de l'asservissement 14, l'actionneur fonctionne en moteur électrique lorsqu'il est alimenté par le dispositif de stockage d'énergie électrique 16 en tant que source de tension pour convertir de l'énergie électrique en énergie mécanique sollicitant la partie massive mobile 13, ou en générateur électrique pour convertir de l'énergie mécanique due au déplacement de la partie massive mobile en énergie électrique à stocker dans le dispositif de stockage qui peut restituer une tension de sortie VS.

Selon la réalisation illustrée à la figure 1, l'actionneur est linéaire synchrone et comprend deux éléments principaux: un induit cylindrique à bobines 11 fixé à l'intérieur du boîtier 10 et un inducteur cylindrique à aimants permanents 12 pouvant coulisser en translation axiale verticale dans l'induit. L'inducteur 12 supporte par une extrémité inférieure la partie massive mobile 13 par l'intermédiaire d'une tige axiale 121.

Selon une variante de l'actionneur linéaire, les positions relatives de l'induit et de l'inducteur peuvent être inversées. L'induit est central et fixé à la tige axiale 121 et est relié par des balais frotteurs à l'amplificateur-onduleur 15. L'inducteur est périphérique et entoure l'induit.

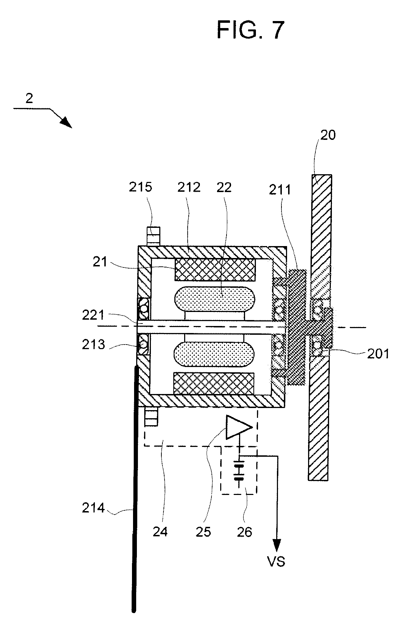

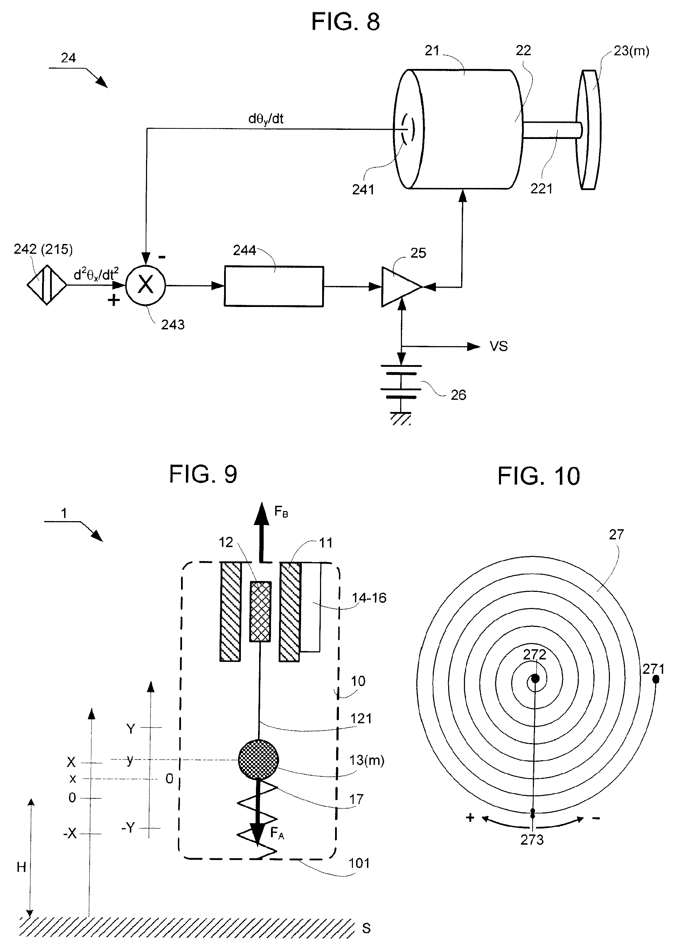

Selon une variante montrée à la figure 2, l'actionneur est une machine tournante à courant continu comprenant un induit statorique cylindrique à aimants permanents 11a et un inducteur rotorique cylindrique à bobines 12a monté tournant dans l'induit 11a. Un exemple de l'actionneur 11 a-12a sera décrit plus en détail en référence aux figures 7 et 8. La partie massive 13a dans cette variante est déplaçable perpendiculairement à une tige axiale 121 a de l'inducteur 12a par l'intermédiaire d'une crémaillère 131 a dont l'extrémité inférieure est fixée à la partie massive et qui s'engrène dans une roue dentée 122a fixée à une extrémité de la tige axiale 121a.

Le boîtier 10 est porté par un système en mouvement et subit de la part de celui-ci des accélérations suivant deux sens opposés. Selon un exemple auquel on se référera par la suite, le système en mouvement est un marcheur portant le boîtier accroché à sa ceinture. Le boîtier 10 est alors soumis à des déplacements oscillatoires sensiblement dans un plan vertical, engendrés par la marche du marcheur et caractérisés par des accélérations suivant deux sens opposés. Selon d'autres exemples, le système en mouvement est un bateau soumis à des déplacements oscillatoires dus au roulis et/ou au tangage sous l'effet de la houle.

La partie massive 13 représentée à la figure 1 est par exemple tout ou partie d'un terminal cellulaire mobile ou un baladeur dont la batterie est au moins en partie le dispositif de stockage d'énergie électrique 16 lui-même, ou tout autre objet tel que porte-clés ou porte-monnaie. La partie massive est amovible de l'actionneur grâce à une fixation sur la tige axiale 121 de type clips, ou rubans tissés à crochets et boucles, ou aimant et fer.

Selon une variante de la réalisation montrée à la figure 1, le boîtier est retourné et l'ensemble comprenant le boîtier 10, l'actionneur 11-12 et le circuit électrique 14-16 est suspendu par la tige axiale 121 de l'actionneur à la ceinture du marcheur afin que la partie massive soit constituée par au moins des composants relativement lourds du dispositif mécatronique. Une masse additionnelle est alors inutile. Dans cette variante, un accéléromètre est fixé à la tige axiale de l'actionneur. La vitesse de l'actionneur par rapport à la tige axiale est mesurée comme précisé ci-dessous. Un terminal cellulaire mobile ou tout autre objet peut aussi être suspendu au boîtier pour l'alourdir, comme précédemment.

Dans la figure 1, la flèche orientée vers le haut matérialise la force de maintien $F_B$ exercée par la ceinture sur le boîtier 10. La flèche orientée vers le bas matérialise l'action $F_A$ de la partie massive exercée sur la tige axiale 121 de l'actionneur. La position du boîtier 10 par rapport à un repère lié au sol S et dont l'origine O est à une hauteur H du sol et l'amplitude du mouvement du boîtier sont notées x et X. La position de la partie massive 13 par rapport à un repère lié au boîtier et l'amplitude du mouvement de la partie massive dans le boîtier sont notées y et Y. Le boîtier avec tous ses composants a une masse M et la partie massive mobile a une masse m.

Selon l'invention, l'actionneur 11-12 est asservi de manière à prélever automatiquement beaucoup plus d'énergie qu'avec un générateur passif selon la technique antérieure. Lorsque l'actionneur fonctionne en générateur électrique, le boîtier 10 est par exemple accéléré vers le haut et la coordonnée x augmente, et la partie massive 13 tend à demeurer en place de par son inertie et la coordonnée y diminue. Le générateur fournit alors une énergie électrique pouvant être stockée dans le dispositif 16.

Les forces $F_A$ et $F_B$ sont données par les relations suivantes :

$$F_A = mg + (m\, d^2x/dt^2 + m\, d^2y/dt^2)$$

et

$$F_B = Mg + (M-m)\, d^2x/dt^2 + (m\, d^2x/dt^2 + m\, d^2y/dt^2),$$

g étant l'accélération de la gravité.

La puissance instantanée $P_A$ délivrée à l'actionneur par intermédiaire de la tige axiale 121 et la puissance instantanée $P_B$ prélevée du marcheur au point d'accrochage du boîtier à la ceinture du marcheur s'expriment par les produits suivants du type "force x vitesse" :

$$P_A(t) = -\, F_A\, dy/dt \text{ et } P_B(t) = F_B\, dx/dt.$$

Ces puissances présentent la même valeur moyenne P en négligeant tout frottement dans le boîtier et en supposant que tous les mouvements sont périodiques ce qui impose que tous les produits de dérivées dépendant de la même variable x ou y sont en moyenne nuls. Les puissances moyennes des puissances précédentes deviennent alors :

$$P = <P_A> = -\, m\, <(d^2x/dt^2)\,(dy/dt)>$$

et

$$P = \langle P_B \rangle = m \langle (d^2y/dt^2)(dx/dt) \rangle.$$

La première relation précédente exprime que la puissance mécanique fournie à l'actionneur fonctionnant en générateur dépend de l'accélération verticale $d^2x/dt^2$ imposée au boîtier par le marcheur et de la vitesse verticale $dy/dt$ de la partie massive par rapport au boîtier. Sachant que l'accélération $d^2x/dt^2$ imposée au boîtier dépend du marcheur, l'invention asservit la vitesse $dy/dt$ de la partie massive sur l'accélération du boîtier. Afin de réguler la vitesse de la partie massive, l'asservissement électronique 14 comprend un capteur de vitesse 141, un accéléromètre 142, un soustracteur-multiplicateur 143, un correcteur 144 et l'amplificateur-onduleur réversible 15, comme montré à la figure 2. Le capteur de vitesse 141 mesure la vitesse de rotation de l'inducteur 12a, ou la vitesse de translation de l'inducteur 12 intégré à la partie massive 13a ou 13 et donc capte une grandeur proportionnelle à la vitesse verticale $dy/dt$ de la partie massive. Par exemple, le capteur de vitesse capte la vitesse de déplacement de l'inducteur en fonction de la tension induite dans un enroulement de celui-ci ou de la tension aux bornes de l'actionneur par effet Hall, ou par une cellule électro-optique. L'accéléromètre 142 est fixé au boîtier 10 et mesure l'accélération sensiblement verticale $d^2x/dt^2$ du boîtier.

Selon une relation entre l'accélération du boîtier et la vitesse de la partie massive conformément à l'invention, le soustracteur-multiplicateur 143 produit un paramètre dépendant de l'accélération mesurée du boîtier et de la vitesse de déplacement mesurée de la partie massive. Le soustracteur-multiplicateur obtient ce paramètre en multipliant l'accélération mesurée par un facteur prédéterminé dépendant notamment des amplitudes de l'accélération et de la vitesse et soustrait le produit obtenu à la grandeur proportionnelle à la vitesse verticale mesuré $dy/dt$. Le correcteur 144 corrige la différence délivrée par le soustracteur-multiplicateur par rapport à une valeur de consigne dépendant de la position du boîtier pour appliquer une tension d'entrée à l'amplificateur-onduleur 15 en fonction de la différence corrigée. Selon la tension d'entrée fonction de la différence corrigée, l'amplificateur-onduleur est réversible pour adapter les variations de l'énergie électrique tantôt à récupérer de l'actionneur et tantôt à fournir à l'actionneur aux courant et tension continues aux bornes du dispositif de stockage 16. L'amplificateur-onduleur est relié au dispositif de stockage d'énergie 16 et à l'actionneur 11-12 pour imposer un courant et une tension à l'actionneur pour que celui-ci fonctionne en moteur électrique avec le dispositif de stockage d'énergie électrique 16 utilisé en source de tension, ou bien en générateur électrique pour assurer la charge en énergie électrique du dispositif de stockage 16.

Au repos, la partie massive 13a ou 13 est descendue au fond du boîtier, et n'est remontée au milieu de la course de la crémaillère 131a, ou de la tige axiale 121, que lorsque l'accéléromètre détecte un déplacement du boîtier. En variante, la partie massive est équilibrée en permanence par un ressort de compression fixée entre la partie inférieure du boîtier et la crémaillère 131a, ou de la tige axiale 121, ou par un ressort d'attraction fixée entre la partie supérieure du boîtier et la crémaillère 131a, ou la tige axiale 121.

Par exemple, on suppose que l'actionneur fonctionnant en moteur impose un déplacement sensiblement sinusoïdal à la partie massive dans le boîtier et le boîtier se déplace verticalement de manière sensiblement sinusoïdale par rapport au sol S, soit :

$$x = X \sin(2\pi ft),$$

et

$$y = Y \sin(2\pi ft + \varphi),$$

où $f$ est la fréquence des déplacements sensiblement sinusoïdaux et $\varphi$ le déphasage entre ceux-ci qui est égal à $-\pi/2$ pour maximiser la puissance moyenne $P$. Pour $P = \langle P_A \rangle$, ceci conduit à asservir la vitesse de la partie massive par rapport au boîtier à l'accélération du boîtier par rapport au sol. Ceci est plus aisé à mettre en oeuvre que d'asservir l'accélération de la partie massive par rapport au boîtier à la vitesse du boîtier par rapport au sol selon $P = \langle P_B \rangle$.

Avec ces hypothèses, la relation de dépendance de la vitesse de la partie massive par rapport à l'accélération du boîtier est la suivante :

$$dy/dt = -(Y/2\pi fX)(d^2x/dt^2).$$

Les paramètres $f$ et $X$ sont déductibles de l'accélération mesuré $d^2x/dt^2$ du boîtier. Le débattement $2Y$ de la partie massive est limité tout en constatant que plus le débattement est grand, plus la puissance à récupérer est grande.

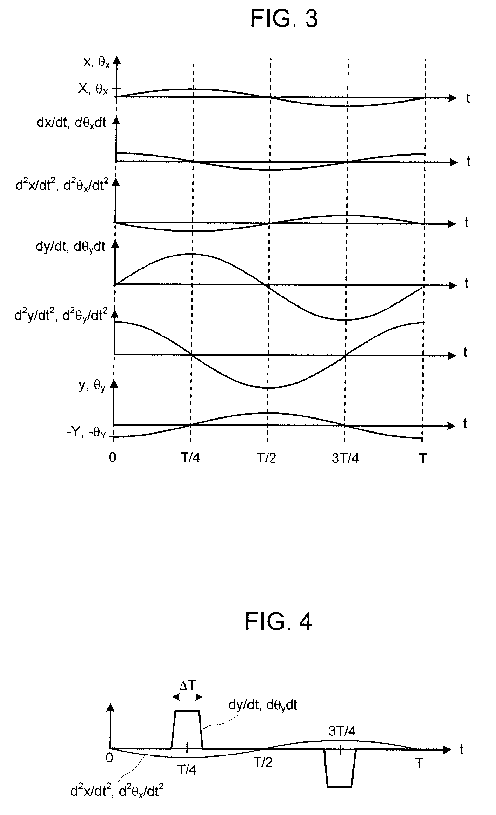

La figure 3 montre l'évolution des coordonnées x et y et de leurs vitesses et accélérations en fonction du temps t, lorsque les mouvements linéaires du boîtier et de la partie massive sont supposés sensiblement sinusoïdaux au cours du temps avec une période T = 1/f, comme précédemment. La position x du boîtier par rapport au sol S est imposée par les mouvements du marcheur. La vitesse dx/dt et l'accélération $d^2x/dt^2$ du boîtier sont également imposées par le marcheur, soit :

$$dx/dt = 2\pi fX \cos (2\pi ft),$$

$$d^2x/dt^2 = -4\pi^2f^2X \sin (2\pi ft).$$

La vitesse de la partie massive par rapport au boîtier

$$dy/dt = 2\pi fY \cos (2\pi ft + \varphi) = 2\pi fY \sin(2\pi ft)$$

est asservie à l'accélération $d^2x/dt^2$ du boîtier selon la relation dy/dt = -($d^2x/dt^2$)(Y/2$\pi$fX). La position y de la partie massive dans le boîtier et son accélération $d^2y/dt^2$ en découlent. Aux instants 0 et T/2, la vitesse dx/dt du boîtier est maximale et bien que faible, l'accélération $d^2y/dt^2$ de la partie massive est alors maximale, de même signe que la vitesse du boîtier : le dispositif 1 bénéfice ainsi d'une force $F_B$ importante et donc d'une puissance $P_B$ significative au niveau de la ceinture. L'énergie prélevée n'est pas instantanément transmise à la tige axiale 121, 121a de l'actionneur : une part de l'énergie prélevée est d'abord convertie en énergie cinétique.

Par exemple selon la figure 3, l'asservissement de la vitesse de déplacement de la partie massive à l'accélération du boîtier présente un cycle ayant quatre phases de fonctionnement de l'actionneur électromagnétique 11-12 qui correspondent sensiblement à quatre quarts de période et qui ont des durées quelque peu inégales puisque la puissance moyenne <$P_A$> n'est pas nulle et dépend du produit sin(2$\pi$ft) cos(2$\pi$ft + $\varphi$) pendant une période. Au début d'une demi-période T/2, l'actionneur fonctionne d'abord en moteur sensiblement entre les instants 0 et T/4 pour remonter la partie massive 13 avec une vitesse croissante sensiblement jusqu'au milieu de sa course tant que l'accélération du boîtier orientée vers le bas suivant la descente, c'est-à-dire suivant le sens opposé à la montée de la partie massive, augmente ; l'énergie électrique consommée par l'actionneur est transformée en énergie cinétique pour diminuer l'accélération de la partie massive. Puis sensiblement entre les instants T/4 et T/2, l'actionneur fonctionne en générateur électrique pour diminuer de plus en plus la vitesse de la partie massive suivant le sens de la montée pendant une diminution de l'accélération du boîtier suivant le sens de la descente de manière à récupérer l'énergie cinétique convertie en énergie électrique par freinage de plus en plus fort de la partie massive finissant de monter. Au début de la demi-période suivante sensiblement entre les instants T/2 et 3T/4, la partie massive descend et l'actionneur fonctionne en moteur pour augmenter la vitesse de la partie massive suivant la descente, au cours d'une augmentation de l'accélération du boîtier suivant le sens de la montée. Finalement sensiblement entre les instants 3T/4 et T, on retrouve une décélération de la partie massive par freinage de plus en plus fort de celle-ci finissant de monter exercé par l'actionneur fonctionnant en générateur et donc une diminution de la vitesse de la partie massive suivant la descente pendant une diminution de l'accélération du boîtier suivant le sens de la montée.

Le prélèvement automatique d'énergie s'effectue par la mise en mouvement du dispositif mécatronique, sans contact mécanique avec une référence fixe telle que le sol. Cela justifie l'utilisation d'une inertie puisqu'une partie massive mobile dans un boîtier tend à demeurer immobile par rapport au sol lorsque le boîtier est par exemple suspendu à la ceinture d'un marcheur. Le mouvement relatif de la partie massive par rapport au boîtier permet de commander l'actionneur à condition que de l'énergie soit suffisamment prélevée.

Comme montré ci-dessus, l'énergie récupérée est maximisée en imposant à l'axe de l'actionneur une vitesse en relation directe avec l'accélération du boîtier. Grâce à l'asservissement, ces deux grandeurs sont maintenues en phase. Selon l'objectif visé tel qu'une minimisation de la gêne occasionnée et/ou une maximisation de la puissance recueillie et/ou une simplicité de réalisation, la variation imposée à la vitesse de la partie massive par l'asservissement peut être sensiblement sinusoïdale, comme dans l'exemple précédent, ou sensiblement trapézoïdale, ou de même type que l'accélération du boîtier.

L'amplitude de la vitesse est déterminée de manière à contrôler le débattement 2Y de la partie massive dans le boîtier. Si la force $F_A$ est limitée au niveau de l'axe de l'actionneur, la force $F_B$ est également, par réaction, limitée au niveau de la fixation du boîtier à la ceinture. Si la vitesse du boîtier est faible, alors la puissance mécanique transmise au boîtier par sa fixation est très réduite. Autrement dit, pour augmenter la puissance mécanique prélevée par le boîtier, et donc la puissance électrique prélevée, l'invention préconise d'accélérer, puis de freiner la partie massive sans artifice, tel que la suspension par ressort d'une partie massive, pour récupérer de l'énergie électrique.

Un grand débattement 2Y de la partie massive favorise la récupération d'énergie, notamment à partir de mouvements lents du boîtier. Une partie massive légère à porter par le marcheur est compatible avec une énergie prélevée importante à condition d'imposer de fortes accélérations à la partie massive, ce qui se traduit par un grand débattement 2Y, lequel est à adapter aux dimensions du boîtier.

Comme indiqué ci-dessus, le déplacement vertical de la partie massive dans le boîtier peut être autre que sinusoïdal. En particulier pour optimiser le bilan énergétique, l'invention préconise de profiter du maximum de l'accélération du boîtier sensiblement aux instants T/4 et 3T/2 d'une période T pour que l'actionneur 11-12 fonctionne en moteur et imprime une vitesse très élevée à la partie massive 13, puisque la puissance moyenne <$P_A$> fournie à l'actionneur est proportionnelle au produit de l'accélération $d^2x/dt^2$ du boîtier et de la vitesse $dy/dt$ de la partie massive qui est asservie sur l'accélération. La partie massive est alors freinée par l'actionneur fonctionnant en générateur électrique lorsque l'accélération du boîtier est plus faible sensiblement autour des instants 0 et T/2.

La figure 4 illustre une telle optimisation avec une vitesse $dy/dt$ de la partie massive augmentant brusquement autour des instants T/4 et 3T/2 d'une période T, selon une variation sensiblement trapézoïdale pendant une durée ∆T inférieure à la période T. L'optimisation est obtenue par l'asservissement 14 qui impose à travers le correcteur 144 des consignes de courant engendrant des "impulsions" de vitesse de partie massive mobile toujours de même amplitude Y et de même durée ∆T correspondant au débattement maximal de la partie massive et synchronisée avec une accélération maximale du boîtier. Plus précisément, l'actionneur 11-12 présente un cycle de fonctionnement à deux phases correspondant à deux demi-périodes. L'actionneur fonctionne brusquement en moteur juste au début des impulsions de vitesse de durée ∆T sensiblement entre les instants (T/4-∆T/2) et T/4 et entre (3T/4-∆T/2) et 3T/4 pour augmenter brusquement la vitesse de déplacement de la partie massive suivant la montée et la descente vers son maximum pendant une augmentation en valeur absolue de l'accélération du boîtier. La vitesse de la partie massive dans le boîtier peut atteindre alors la vitesse $(dy/dt)_{max} = 2Y/∆T$. Sensiblement entre les instants (T/4+∆T/2) et (3T/4-∆T/2), l'actionneur fonctionne brusquement en générateur pour diminuer la vitesse de déplacement de la partie massive suivant la montée et la descente vers zéro pendant une diminution en valeur absolue de l'accélération du boîtier. Entre les impulsions de vitesse ∆T, l'actionneur ne fonctionne pas et la partie massive est maintenue au repos à y = 0.

En supposant que la durée ∆T est très inférieure à la période T, la puissance moyenne devient alors :

$$P = <P_A> = (2∆T/T) \ m \ (d^2x/dt^2)_{max} \ (dy/dt)_{max},$$

soit

$$P = (2∆T/T) \ m \ (4π^2 \ f^2 \ X) \ (2Y/∆T),$$

soit :

$$P = 16π^2 \ m \ f^3 \ XY.$$

Par exemple, en supposant que la partie massive est de 0,2 kg et est asservie avec une amplitude de débattement de Y = 4 cm et l'actionneur porté à la ceinture du marcheur subit des oscillations d'amplitude X = 6 cm et de fréquence f = 2 Hz, la puissance récupérable et de l'ordre de P = 0,605 W si l'optimisation avec des pics de vitesse de la partie massive mobile est mise en oeuvre selon la figure 4.

Sans cette optimisation, la puissance récupérable est :

$$<P_A> = - m \ <(d^2x/dt^2) \ (dy/dt)>,$$

soit

$$P = -m \ 4π^2f^2X \ 2πfY \ (sin(-π/2))/2 = 4π^3 \ m \ f^3 \ XY \ ;$$

$$P = 0,475 \ W.$$

L'optimisation permet de gagner un facteur de $4/\pi$ par rapport à la réalisation avec un simple asservissement de vitesse.

Plus généralement, la vitesse dy/dt de la partie massive peut augmenter et diminuer autour des instants T/4 et 3T/2 de manière dissymétrique.

La première réalisation de l'invention décrite ci-dessus avec ses variantes est suffisante pour alimenter avec une tension de sortie VS un petit objet électrique, par exemple comme un terminal cellulaire mobile, un cardio-tachymètre, ou un dispositif de localisation GPS porté par un animal.

Afin d'économiser de l'énergie électrique susceptible d'être consommée par le dispositif de stockage 16, un interrupteur peut être prévu en sortie de celui-ci de manière à ne pas alimenter l'actionneur 11-12 et l'asservissement 14 tant que l'accéléromètre 142 ne détecte aucun déplacement du boîtier pendant une période prédéterminée. Selon une autre variante, une horloge est incluse dans le dispositif mécatronique 1 et sert à l'expiration de chaque période prédéterminée à réveiller le dispositif mécatronique 1 afin que le capteur de vitesse 141 détecte éventuellement un déplacement de la partie massive, ou afin que l'accéléromètre 142 détecte éventuellement un déplacement du boîtier.

Pour économiser encore plus d'énergie électrique dans la conversion mécanique/électrique et le stockage électrique mais au détriment d'une réduction d'énergie électrique prélevée, l'asservissement 14 ne commande plus l'actionneur 11-12 en moteur pendant les parties du cycle de fonctionnement de l'actionneur qui sont comprises sensiblement entre les instants 0 et T/4 et sensiblement entre les instants T/2 et 3T/4 en référence à figure 3. Pendant ces parties du cycle, la partie massive 12-13 se déplace librement. L'asservissement 14 ne sert qu'à commander l'actionneur en générateur pour charger le dispositif de stockage d'énergie électrique 16 pendant les autres parties du cycle de fonctionnement de l'actionneur comprises sensiblement entre les instants T/4 et T/2 et sensiblement entre les instants 3T/4 et T.

Les explications précédentes sont également valables si l'on considère un mouvement oscillatoire naturel selon une autre direction, par exemple le tangage ou le roulis pour un bateau. La partie massive est alors soumise à l'oscillation naturelle, mais l'effet de son poids peut aller jusqu'à s'annuler à l'horizontale, par exemple, ce qui élimine la nécessité d'équilibrage au repos. Le montage du dispositif peut être du type balancier.

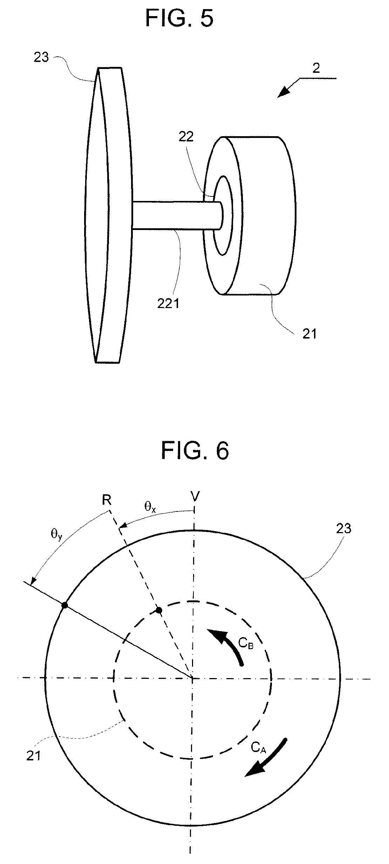

En se référant maintenant aux figures 5 et 6, un dispositif mécatronique de génération d'énergie électrique 2 selon la deuxième réalisation de l'invention comprend un boîtier et une partie massive 23 qui peuvent être animés de mouvements de rotation, à la place des mouvements linéaires du boîtier 10 et de la partie massive 13 selon la première réalisation de l'invention. La partie massive 23 peut comprendre un volant d'inertie qui est fixé à une extrémité d'une tige axiale 221 d'un inducteur rotorique 22 apte à tourner dans un induit statorique 21 d'un actionneur tournant réversible 21-22. En variante, le volant est remplacé par deux masselottes qui sont fixées ou peuvent coulisser librement symétriquement sur une tige diamétrale fixée à une extrémité de la tige axiale 221, ou qui peuvent coulisser symétriquement sur la tige diamétrale de manière asservie par l'intermédiaire de l'asservissement 24, ou qui sont montées aux extrémités de deux sommets opposées d'un quadrilatère déformable dont un autre sommet est fixé à l'extrémité de la tige axiale et dont la déformation peut être asservie par l'intermédiaire de l'asservissement 24. Les variantes avec des masselottes mobiles sur la tige diamétrale ou avec le quadrilatère déformable permettent de régler le moment d'inertie de la partie massive en fonction des phases asservies du cycle de fonctionnement de l'actionneur. Un système à piston peut également déplacer un fluide incompressible pour régler le moment d'inertie de la partie massive par rapport à l'axe de rotation.

Le débattement $2\theta_Y$ de la partie massive 23 est maintenant angulaire et n'est plus limité par la dimension verticale du boîtier.

La figure 7 montre plus en détail la deuxième réalisation du dispositif mécatronique selon l'invention qui inclut un actionneur électromagnétique réversible tournant par exemple à quatre pôles sous la forme d'une machine tournante synchrone à aimants plus conventionnelle qu'un actionneur linéaire.

Le dispositif mécatronique 2 comprend un boîtier 20 contenant l'actionneur 21-22, la partie massive mobile constituée essentiellement par l'inducteur rotorique cylindrique 22 de l'actionneur, et un circuit électrique 24-26. Si l'inertie de l'inducteur rotorique est insuffisante, la partie massive peut être complétée par un petit volant solidaire de la tige axiale 221 de l'inducteur rotorique, comme le volant d'inertie 23 montré à la figure 5. Dans la figure 7, le boîtier 20 est représenté partiellement sous la forme d'un support vertical qui est par exemple fixé sous la ceinture ou à la jambe d'un marcheur. Le boîtier 20 est monté tournant par l'intermédiaire d'un roulement à billes 201 autour d'un pivot 211 fixé à une extrémité d'un cylindre en acier doux 212. Un induit statorique cylindrique 21 de l'actionneur est fixé sur la surface intérieure du cylindre 212 dont des extrémités sont fermées et montées à rotation autour de la tige axiale 221 de l'inducteur rotorique 22 par l'intermédiaire de deux roulements à billes 213. La surface extérieure du cylindre 212 supporte l'asservissement 24, l'amplificateur-onduleur réversible 25 et le dispositif de stockage d'énergie électrique miniature 26. L'induit statorique 21 est animé d'un mouvement de rotation relativement lent par rapport au mouvement de rotation rapide de l'inducteur rotorique 22.

Une extrémité de l'induit cylindrique 21 supporte le pivot 211 découplé en rotation du boîtier 20 par le roulement à billes 201. Les roulements à billes 213 découplent en rotation l'induit rotorique 22. Ces découplages améliorent le confort du marcheur portant le dispositif 2 en isolant le boîtier 20 d'éventuelles vibrations dues à la rotation rapide de l'inducteur rotorique, puisque l'induit statorique n'est sollicité que par des oscillations angulaires lentes.

Selon une variante de l'actionneur tournant, les positions relatives de l'induit et de l'inducteur peuvent être inversées. L'induit est central et fixé à la tige axiale 221 et est relié par des balais frotteurs à l'amplificateur-onduleur 25. L'inducteur est périphérique et fixé à la surface intérieure du cylindre 212.

Selon une autre variante non représentée, pour profiter de la majeure partie de l'inertie du dispositif mécatronique, le volant d'inertie est remplacé par les masses de certains composants du dispositif mécatronique, tels que certains composants relativement lourds du circuit électrique 24-26 comme le dispositif de stockage 26, et/ou par un terminal cellulaire mobile lorsque celui-ci est à alimenter avec une tension de sortie VS par le dispositif de stockage 26. Ces masses additionnelles sont fixées à la tige axiale 221 a, 221 b de l'actionneur 21 a-22a, 21 b-22b pour profiter de l'inertie globale.

Dans la deuxième réalisation, à l'extrémité du cylindre 212 supportant l'induit statorique cylindrique 21 opposée au circuit électrique 24-26 peut être fixé un bras de couplage 214 apte à être animé d'un mouvement oscillatoire lent dû au marcheur. Un capteur de mesure d'accélération angulaire fixé au cylindre 212 de l'induit statorique 21 est composé de deux accéléromètres miniatures 215 diamétralement opposés par rapport à la tige axiale 221. Les accéléromètres 215 sont propres à mesurer des accélérations opposées suivant une direction de sensibilité de mesure d'accélération sensiblement parallèle au sol lorsque le boîtier est accroché à la jambe du marcheur.

L'asservissement électronique 24 montré à la figure 8 pour commander l'actionneur 21-22 est similaire à l'asservissement 14 selon la première réalisation. L'asservissement électronique 24 comprend un capteur de vitesse 241 mesurant la vitesse de rotation angulaire de l'inducteur 21 et le capteur à double accéléromètre 242 qui sont reliés aux entrées différentielles d'un circuit de commande 243-244-25, d'une manière similaire à la première réalisation montrée à la figure 2. En fonction d'une relation liant l'accélération angulaire $d^2\theta_x/dt^2$ de l'induit statorique 21 et la vitesse angulaire $d\theta_y/dt$ de la partie massive constituée essentiellement par l'inducteur rotorique 22, un correcteur 244 dans le circuit de commande recueille d'un soustracteur-multiplicateur 243 une différence entre d'une part le produit de l'accélération angulaire mesurée par un facteur prédéterminé dépendant notamment des amplitudes de l'accélération angulaire et de la vitesse angulaire et d'autre part une grandeur proportionnelle à la vitesse angulaire $d\theta_y/dt$ et compare la différence obtenue à une valeur de consigne dépendant de la position angulaire $\theta_x$ du boîtier. Le résultat de la comparaison sert à appliquer une tension d'entrée à l'amplificateur-onduleur 25 relié au dispositif de stockage d'énergie 26 pour imposer un courant et une tension à l'actionneur 21-22 pour que celui-ci fonctionne en moteur avec le dispositif de stockage d'énergie électrique 26 utilisé en source de tension, ou bien en générateur pour charger électriquement le dispositif de stockage 16.

Par exemple le dispositif mécatronique 2 peut être porté au poignet ou à la cuisse d'un marcheur, ou fixé sur un bateau.

Comme dans la première réalisation, afin d'économiser de l'énergie électrique susceptible d'être consommée par le dispositif de stockage 26, l'alimentation du circuit électrique 24-26 peut être coupée manuellement par un interrupteur afin de ne pas alimenter l'actionneur 21-22 et l'asservissement 24 tant que le capteur à deux accéléromètres 242 ne détecte aucun déplacement du boîtier pendant une période prédéterminée.

Le principe de fonctionnement du dispositif mécatronique 2 est essentiellement similaire à celui du dispositif mécatronique 1 selon la première réalisation, en faisant correspondre une vitesse linéaire à une vitesse de rotation angulaire et une accélération linéaire à une accélération de rotation angulaire. Grâce au découplage mécanique du boîtier 20 par rapport à l'induit statorique 21 conféré par au moins le roulement à billes 201, l'induit statorique est entraîné par des mouvements naturels du système en mouvement, tel qu'un marcheur, sur lequel une énergie mécanique doit être récupérée. Le mouvement du système présente une composante de rotation comme c'est le cas autour du col du fémur de la cuisse d'un marcheur, ou au niveau du poignet de ce dernier, ou sur un bateau subissant un roulis et/ou un tangage. L'énergie récupérée par l'oscillation naturelle de l'induit statorique 21 est maximisée en imposant à la partie massive tournante constituée par l'inducteur rotorique 22 une vitesse angulaire en relation directe avec l'accélération angulaire de l'induit statorique. Cependant, dans la deuxième réalisation, la vitesse angulaire propre de l'inducteur rotorique 22 n'est plus limitée par des contraintes dimensionnelles du boîtier 20 et peut être très élevée comparativement à la vitesse angulaire faible de l'induit statorique 21 dont un maximum d'énergie est à récupérer.

Dans la figure 6, la flèche orientée suivant le sens trigonométrique matérialise un couple résistant $C_B$ exercé par le corps du marcheur sur l'induit statorique. La flèche orientée suivant le sens trigonométrique inverse matérialise l'action $C_A$ du volant d'inertie 23 et de l'inducteur rotorique 22 exercée sur la tige axiale 221 de l'actionneur. La position angulaire de l'induit statorique 21 par exemple par rapport à une verticale V liée au sol et l'amplitude angulaire du mouvement de rotation de l'induit statorique sont notées $\theta_x$ et $\theta_X$. La position angulaire de la partie massive par rapport à un repère lié à un rayon R de l'induit statorique et l'amplitude du mouvement de rotation de la partie massive dans le boîtier sont notées $\theta_y$ et $\theta_Y$. Le dispositif 2 avec le boîtier et tous ses composants a un moment d'inertie global J et la partie massive mobile totale 22-23 comprenant notamment l'induit rotorique 22, la tige axiale 221 et éventuellement le volant d'inertie 23 a un moment d'inertie j.

Si le boîtier est animé d'un mouvement de rotation en même temps que la partie massive 22-23 tourne, les couples $C_A$ et $C_B$ sont donnés par les relations suivantes :

$$C_A = j \, d^2\theta_x/dt^2 + j \, d^2\theta_y/dt^2$$

$$C_B = (J-j) \, d^2\theta_x/dt^2 + C_A = J \, d^2\theta_x/dt^2 + j \, d^2\theta_y/dt^2.$$

La puissance instantanée $P_A$ délivrée à l'actionneur 21-22 par intermédiaire de la tige axiale 221 et la puissance instantanée $P_B$ prélevée du marcheur au point d'accrochage du boîtier à la jambe du marcheur s'expriment par les produits suivants du type "couple x vitesse angulaire" :

$$P_A(t) = - C_A \, d\theta_y/dt \text{ et } P_B(t) = C_B \, d\theta_x/dt.$$

Ces puissances présentent la même valeur moyenne P en négligeant tout frottement dans le boîtier et en supposant que toutes les rotations sont périodiques ce qui impose que tous les produits de dérivées dépendant de la même variable $\theta_x$ ou $\theta_y$ sont en moyenne nuls. Les puissances moyennes des puissances précédentes deviennent alors :

$$P = <P_A> = - j <(d^2\theta_x/dt^2) \, (d\theta_y/dt)>$$

et

$$P = <P_B> = j <(d^2\theta_y/dt^2) \, (d\theta_x/dt)>.$$

La première relation précédente exprime que la puissance mécanique fournit à l'actionneur fonctionnant en générateur dépend de l'accélération angulaire $d^2\theta_x/dt^2$ imposée à l'induit statorique par le marcheur et de la vitesse angulaire $d\theta_y/dt$ de la partie massive par rapport à l'induit statorique. Sachant que l'accélération $d^2\theta_x/dt^2$ imposée à l'induit statorique dépend du marcheur, l'invention asservit la vitesse $d\theta_y/dt$ de la partie massive sur l'accélération de l'induit statorique. Pour une faible variation de l'accélération angulaire de l'induit statorique, plus la vitesse de l'inducteur rotorique et donc de la partie massive est élevée, plus la quantité d'énergie récupérée est élevée. La régulation de la vitesse angulaire de la partie massive sur l'accélération angulaire de l'induit statorique est assurée par l'asservissement électronique 24 montré à la figure 8, comme cela a été décrit en référence à la figure 2.

Par exemple, on suppose que l'actionneur 21-22 fonctionnant en moteur impose une rotation sensiblement sinusoïdale en fonction du temps à la partie massive 22-23 dans l'induit statorique et l'induit statorique se déplace alternativement selon une rotation sensiblement sinusoïdale par rapport au sol, soit :

$$\theta_x = \theta_X \sin(2\pi ft),$$

$$\theta_y = \theta_Y \sin(2\pi ft + \varphi)$$

où f est la fréquence des déplacements sensiblement sinusoïdaux et $\varphi$ le déphasage entre ceux-ci qui est égal à $-\pi/2$ pour maximiser la puissance moyenne P. Pour $P = <P_A>$, ceci conduit à asservir la vitesse angulaire de la partie massive par rapport à l'induit statorique à l'accélération angulaire de ce dernier, ce qui est plus aisé à mettre en oeuvre que d'asservir l'accélération angulaire de la partie massive à la vitesse angulaire de l'induit statorique selon $P = <P_B>$.

Avec ces hypothèses, la relation de dépendance de la vitesse angulaire de la partie massive

$$d\theta_y/dt = 2\pi f\theta_Y \cos(2\pi ft - \pi/2) = 2\pi f\theta_Y \sin(2\pi ft)$$

par rapport à l'accélération angulaire de l'induit statorique $d^2\theta_x/dt^2 = °-4\pi^2f^2\theta_X \sin(2\pi ft)$ qui peut-être mesurée par les deux accéléromètres 215 suffisamment écartés du capteur 242, est la suivante :

$$d\theta_y/dt = -(\theta_Y/2\pi f\theta_X)\,(d^2\theta_x/dt^2).$$

Les paramètres $f$ et $\theta_X$ sont déductibles de l'accélération mesurée $d^2\theta_x/dt^2$ de l'induit statorique. L'amplitude $\theta_Y$ de la partie massive n'est plus limitée par des dimensions du boîtier.

La puissance moyenne devient alors :

$$P = <P_A> = -j<(d^2\theta_x/dt^2)\,(d\theta_y/dt)> = <P_B>,$$

soit

$$P = -j(-4\pi^2 f^2\theta_X)\,(2\pi f\theta_Y)/2 = 4\pi^3\,jf^3\,\theta_X\theta_Y.$$

La figure 3 illustre également l'évolution des positions angulaires $\theta_x$ et $\theta_y$ et de leurs vitesses et accélérations en fonction du temps $t$, lorsque les rotations de l'induit statorique et de la partie massive sont supposés sensiblement sinusoïdales au cours du temps avec une période $T = 1/f$. La position angulaire $\theta_x$ de l'induit statorique par rapport à la verticale $V$ est imposée par les mouvements du marcheur. La vitesse $d\theta_x/dt$ et l'accélération $d^2\theta_x/dt^2$ de l'induit statorique sont également imposées par le marcheur, soit :

$$d\theta_x/dt = 2\pi f\theta_X\cos(2\pi ft),$$

$$d^2\theta_x/dt^2 = -4\pi^2 f^2\theta_X\sin(2\pi ft).$$

La vitesse angulaire de la partie massive par rapport à l'induit statorique

$$d\theta_y/dt = 2\pi f\theta_Y\cos(2\pi ft + \varphi) = 2\pi f\theta_Y\sin(2\pi ft)$$

est asservie à l'accélération angulaire $d^2\theta_x/dt^2$ de l'induit statorique selon la relation $d\theta_y/dt = -(\theta_Y/2\pi f\theta_X)\,(d^2\theta_x/dt^2)$. La position angulaire $\theta_y$ de la partie massive dans le boîtier et son accélération $d^2\theta_y/dt^2$ en découlent. Aux instants 0 et $T/2$, la vitesse angulaire $d\theta_x/dt$ de l'induit statorique est maximale et bien que faible, l'accélération angulaire $d^2\theta_y/dt^2$ de la partie massive est alors maximale, de même signe que la vitesse de l'induit statorique : le dispositif 2 bénéfice ainsi d'un couple $C_B$ important et donc d'une puissance $P_B$ significative au niveau de la jambe. L'énergie prélevée n'est pas instantanément transmise à la tige axiale 221 de l'actionneur : une part de l'énergie prélevée est d'abord convertie en énergie cinétique.

Par exemple selon la figure 3, au cours d'une demi-période $T/2$, l'actionneur 21-22 fonctionne en moteur sensiblement entre les instants 0 et $T/4$ pour tourner la partie massive 22-23 selon le sens trigonométrique avec une vitesse angulaire croissante sensiblement jusqu'au rayon R tant que l'accélération angulaire l'induit statorique augmente suivant selon le sens trigonométrique inverse ; l'énergie électrique consommée par l'actionneur est transformée en énergie cinétique pour diminuer l'accélération de la partie massive. Puis sensiblement entre les instants $T/4$ et $T/2$, l'actionneur fonctionne en générateur électrique de manière à récupérer l'énergie cinétique en freinant la partie massive dont la vitesse angulaire suivant le sens de trigonométrique diminue pendant que l'accélération angulaire de l'induit statorique diminue suivant selon le sens trigonométrique inverse. Pendant la demi-période suivante sensiblement entre les instants $T/2$ et $T$, la partie massive tourne suivant le sens trigonométrique inverse, et on retrouve une augmentation de la vitesse angulaire de la partie massive par l'actionneur fonctionnant en moteur pendant une augmentation de l'accélération angulaire suivant le sens trigonométrique, puis une diminution de la vitesse angulaire de la partie massive par un freinage exercé par l'actionneur pendant une diminution de l'accélération angulaire de l'induit statorique suivant selon le sens trigonométrique.

Ainsi, pendant chaque pas du marcheur, l'actionneur 21-22 fonctionne dans les deux sens de rotation : l'actionneur d'une part accélère son mouvement et donc consomme de l'énergie électrique et d'autre part récupère de l'énergie électrique et donc freine son mouvement. Le mouvement de l'actionneur est synchronisé à celui du marcheur de manière à ce que celui-ci ressente une résistance, gage d'une certaine énergie mécanique récupérée des mouvements du marcheur, convertie par l'actionneur et transmise au dispositif de stockage d'énergie électrique 26 par l'intermédiaire du circuit électrique. Cette énergie n'est pas transmise instantanément au dispositif de stockage car la partie massive 22-23 stocke transitoirement de l'énergie. La mise en équations des mouvements et leur résolution comme décrit ci-dessus montrent que l'énergie électrique, ou l'énergie mécanique au niveau de l'actionneur, oscille entre deux valeurs extrêmes pouvant être bien supérieures en valeur absolue à sa valeur moyenne, cette dernière assurant la recharge du dispositif de stockage.

Qualitativement, l'actionneur 21-22 accélère et freine violemment la partie massive 22-23 parce que les mouvements du marcheur sont relativement longs, c'est-à-dire la rotation de la jambe au niveau de la hanche a une vitesse angulaire lente, et parce qu'il est nécessaire que le marcheur ressente un effort significatif pour en retirer une puissance suffisante.

Comme déjà indiqué, l'énergie récupérée est d'autant plus élevée que la vitesse angulaire de la partie massive est élevée et donc que la variation de vitesse angulaire est petite. Une variante du fonctionnement de l'actionneur selon l'invention consiste alors à lancer en rotation la partie massive 22-23 à une vitesse angulaire nominale élevée, en pratique nettement plus élevée que la vitesse angulaire maximale de l'induit statorique, et de faire varier la vitesse angulaire $d\theta_y/dt$ de la partie massive autour de cette vitesse angulaire nominale. Cette variante a pour avantage de faire fonctionner le circuit électrique 24-26 avec une tension moyenne élevée supérieure à celle du dispositif de stockage 26 par exemple, et d'avoir en permanence un fort couplage inertiel entre la partie massive et le marcheur.

En variante, l'asservissement peut être tel que la vitesse angulaire maximale de la partie massive est atteinte en plusieurs pas du marcheur, au lieu d'un seul pas.

Le déplacement de la partie massive 22-23 dans le boîtier 20 peut être autre que sinusoïdal. En particulier pour optimiser le bilan énergétique, l'invention préconise de profiter du maximum de l'accélération de l'induit statorique sensiblement aux instants T/4 et 3T/4 d'une période T pour que l'actionneur fonctionne en moteur et imprime brusquement une vitesse très élevée à la partie massive, puisque la puissance moyenne <$P_A$> fournie à l'actionneur 21-22 est proportionnelle au produit de l'accélération $d^2\theta_x/dt^2$ de l'induit statorique et de la vitesse $d\theta_y/dt$ de la partie massive qui est asservie sur l'accélération. La partie massive est ensuite freinée par l'actionneur fonctionnant en générateur électrique lorsque l'accélération de l'induit statorique diminue en valeur absolue.

Cependant dans la deuxième réalisation, il n'existe plus de contrainte concernant le débattement de la partie massive en mouvement dans le boîtier. En conséquence, l'intervalle de temps ΔT n'est plus limité de la même façon et peut éventuellement atteindre la demi-période T/2 pour profiter des plus faibles accélérations de l'induit statorique.

La figure 4 illustre également un exemple d'optimisation avec une vitesse angulaire $d\theta_y/dt$ de la partie massive augmentant brusquement autour des instants T/4 et 3T/2 d'une période T, selon une variation sensiblement trapézoïdale avec une augmentation et une diminution symétriques pendant une durée ΔT inférieure à la période T. L'optimisation est obtenue par l'asservissement 24 qui impose à travers le correcteur 244 des consignes de courant engendrant des "impulsions" de vitesse de partie massive mobile toujours de même amplitude Y et de même durée ΔT correspondant au débattement maximal de la partie massive et synchronisée avec une accélération maximale de l'induit statorique.

En supposant que la durée ΔT est sensiblement égale à la demi-période T/2, la puissance moyenne devient alors :

$$P = <P_A> = (2/\pi) \, j \, (d^2\theta_x/dt^2)_{max} \, (d\theta_y/dt)_{max},$$

soit

$$P = (2/\pi) \, j \, (4\pi^2 \, f^2 \, \theta_X) \, (d\theta_y/dt)_{max},$$

soit :

$$P = 8\pi \, j \, f^2 \, \theta_X \, (d\theta_y/dt)_{max}.$$

Par exemple, pour la même partie massive de m = 0,2 kg que dans l'exemple de la première réalisation, mais sous la forme d'un cylindre creux assez compact comme un anneau de rayon r = 4 cm, soit un moment d'inertie de la partie massive j = $mr^2$ = 0,00032 kg $m^2$, et ayant une vitesse angulaire maximale $(d\theta_y/dt)_{max}$ de 10000 tours/mn, soit 1047 rd/s, et pour l'actionneur 21-22 porté à la ceinture du marcheur subissant des oscillations d'amplitude $\theta_X$ = 0,35 rd et de fréquence f = 1 Hz, la puissance récupérable maximale est de 3 W si la vitesse de la partie massive est asservie à l'accélération de l'induit statorique de forme sinusoïdale.

Sans cette optimisation avec des pics de vitesse de la partie massive mobile, il est préférable pour des raisons technologiques de limiter la vitesse de rotation angulaire de la partie massive mobile à un maximum $(d\theta_y/dt)_{max}$ puisque l'amplitude $\theta_Y$ de la partie massive 22-23 n'est plus limitée par des dimensions du boîtier 20. L'amplitude $\theta_Y$ dépend ainsi de la vitesse maximale, soit $\theta_Y = (1/2\pi f)(d\theta_y/dt)max$. La puissance récupérable est alors :

$$P = 4\pi^3 \, jf^3 \, \theta_X\theta_Y = 4\pi^3 \, jf^3 \, \theta_X((d\theta_y/dt)_{max}/2\pi f),$$

$$P = 2\pi^2 \, jf^2 \, \theta_X(d\theta_y/dt)_{max},$$

soit P = 2,3 W.

L'optimisation permet ainsi de gagner un facteur de $4/\pi$ par rapport à la réalisation avec un simple asservissement de vitesse.

En variante, la variation de la vitesse angulaire de la partie massive est dissymétrique autour des instants T/4 et 3T/2.

Selon encore d'autres variantes l'asservissement peut être tel que le cycle de fonctionnement de l'actionneur tournant s'étende sur plusieurs pas du marcheur, notamment de façon dissymétrique avec un nombre de pas pour atteindre une vitesse angulaire maximale de la partie massive différent d'un nombre de pas pour atteindre une vitesse angulaire minimale de la partie massive.

Selon un autre exemple, la partie massive 23 de masse m est sous la forme d'un disque rotatif de rayon r. L'énergie cinétique totale de l'induit rotorique de moment d'inertie $j = mr^2/2$ et de vitesse angulaire $(d\theta_y/dt)$ est :

$$E = j(d\theta_y/dt)^2/2.$$

Une variation de la vitesse angulaire entraîne une variation d'énergie par interaction avec le mouvement moteur de l'induit statorique lent pour capter l'énergie et une variation opposée pour la restituer vers le dispositif de stockage 26 :

$$P = dE/dt = j \, (d\theta_y/dt)(d^2\theta_y/dt^2).$$

Ainsi pour une variation de vitesse angulaire petite, l'énergie récupérée est d'autant plus élevée que la vitesse angulaire de la partie massive est élevée.

La variation d'énergie entre deux vitesses angulaires du disque rotatif est définie entre deux états d'énergie indépendamment du chemin entre les états par :

$$\Delta E = j((d\theta_y/dt)_1{}^2 - (d\theta_y/dt)_2{}^2)/2.$$

Une variante du fonctionnement de l'actionneur selon l'invention consiste alors à lancer en rotation la partie massive 22-23 à une vitesse angulaire nominale élevée et de faire varier la vitesse angulaire $d\theta_y/dt$ de la partie massive autour de cette vitesse angulaire nominale. Cette variante a pour avantage de faire fonctionner le circuit électrique 24-26 avec une tension moyenne élevée supérieure à celle du dispositif de stockage 26 par exemple, et d'avoir en permanence un fort couplage inertiel entre la partie massive et l'actionneur.

Par exemple, l'inertie obtenue par un disque rotatif de masse m = 0,05 kg et de rayon r = 0,03 m lorsque sa vitesse angulaire varie entre $(d\theta_y/dt)_1$ = 8000 tr/mn et $(d\theta y/dt)_2$ = 6000 tr/mn est $\Delta E$ = 3,3 J. La durée du mouvement d'accélération/freinage d'une jambe étant proche d'une seconde, la puissance moyenne mécanique E/T hors pertes est alors de P = 3,5 W.

Les limites de puissance à prélever sont également dépendantes du confort de l'utilisateur-marcheur. Il ne faut pas que la force de réaction soit trop forte et ponctuelle sur la jambe, ni qu'il y ait une force gyroscopique trop importante à vaincre. Dans la pratique, deux dispositifs mécatroniques selon l'invention sont positionnés symétriquement sur les côtés du corps. La puissance récupérable est alors de l'ordre du Watt, ce qui devient suffisant pour recharger au moins partiellement un terminal cellulaire mobile.

A contrario de l'optimisation et de manière à éviter une consommation d'énergie électrique par le dispositif de stockage d'énergie électrique 26 et à simplifier l'asservissement, l'asservissement 24 ne commande plus l'actionneur 21-22 en moteur pendant les parties du cycle de fonctionnement de l'actionneur qui sont comprises sensiblement entre les instants 0 et T/4 et sensiblement entre les instants T/2 et 3T/4 en référence à figure 3. Pendant ces parties du cycle, la partie massive 22-23 se déplace librement. L'asservissement 24 ne sert qu'à commander l'actionneur en générateur pour charger le dispositif de stockage 26 pendant les autres parties du cycle de fonctionnement de l'actionneur comprises sensiblement entre les instants T/4 et T/2 et sensiblement entre les instants 3T/4 et T.

Selon des variantes des première et deuxième réalisations de l'invention, un moyen élastique tel qu'un ressort est introduit entre le boîtier et la partie massive pour assister l'actionneur particulièrement à accélérer la partie massive lorsque l'actionneur fonctionne en moteur.

Comme montré à la figure 9 pour la première réalisation, un ressort hélicoïdal de compression 17 a des extrémités liées au fond 101 du boîtier 10 et à la partie massive 13. Quand la partie massive 13 est par exemple tout en bas (y < 0) vers le fond de boîtier 101, la partie massive est à accélérer plus ou moins violemment vers le haut, comme cela a été démontré dans le quart de période 0 à T/4 dans la figure 3. Le ressort 17 qui est comprimé lorsque la partie massive est en bas se détend pour pousser la partie massive vers le haut à l'encontre de la pesanteur jusqu'à ce que la partie massive atteigne une vitesse maximale avant d'être freinée. En variante, un autre ressort hélicoïdal de compression a des extrémités liées à la partie supérieure du boîtier 10 et à la partie massive 13.

Pour la deuxième réalisation, le moyen élastique comprend un ressort en spirale 27 dont l'extrémité périphérique 271 est fixée au boîtier 20 et dont l'extrémité centrale 272 est fixée autour de la tige axiale 221 de l'inducteur rotorique 22, comme montré la figure 10. Lorsqu'il est prévu que l'inducteur rotorique effectue un grand nombre de tours dans les deux sens, une démultiplication est introduite entre le ressort et l'actionneur. Un moyen de réglage de raideur à curseur radial 273 sur la dernière spire permet de régler plus ou moins la raideur du ressort 27 selon le marcheur.

Le ressort réduit considérablement le poids et l'encombrement de l'actionneur à condition que la fréquence des mouvements imposés à l'induit statorique ne s'écarte pas trop de la fréquence d'oscillation propre de l'ensemble partie massive et ressort. Pour certaines applications, un moyen de réglage de la raideur du ressort comme le curseur 273 est utilisé pour faire correspondre ces fréquences autant que possible.

Selon des variantes, le ressort en spirale est complété par un ressort en spirale monté en opposition de torsion autour de la tige axiale 221, ou est remplacé par un ressort hélicoïdal de compression ou deux ressorts hélicoïdaux de compression à torsions axiales opposées montés autour d'une extrémité de la tige axiale 221.

L'asservissement peut alors porter également sur la raideur du moyen élastique tel qu'un ou deux ressorts.

A titre d'exemple, pour les grandeurs suivantes :

résistivité du cuivre des enroulements de l'inducteur rotorique : $\rho$ = 1,8 $10^{-8}$ $\Omega$m ;
rayon moyen de l'inducteur rotorique : 4 cm ;
induction magnétique dans l'actionneur : 1,5 T ;
puissance électrique récupérable 2,3 W pour le mouvement angulaire de l'induit statorique autour de f = 1 Hz ;
perte dans le cuivre : environ 0,23 W ;
couple moteur : 0,44 mN avec un ressort au lieu de 2,3 mN sans ressort, dans la gamme de 0,9 Hz à 1,1 Hz ;
on obtient 2,1 cm$^3$ et environ 20 g de cuivre pour une réalisation avec ressort au lieu de 57,5 cm$^3$ et 550 g de cuivre pour une réalisation sans ressort. A puissance récupérable égale, la réalisation avec ressort est beaucoup plus économique et peut être plus miniaturisée.

**Revendications**

**1.** - Procédé de génération d'énergie électrique au moyen d'un actionneur (11-12, 21-22) relié électriquement à un moyen de stockage d'énergie électrique (16, 26) et comportant un premier élément (11, 21) apte à être soumis à un déplacement à vitesse oscillatoire et un deuxième élément (12, 22) constituant au moins en partie une partie massive (13, 23) apte à osciller en vitesse par rapport au premier élément, **caractérisé en ce qu'**il comprend un asservissement du déplacement de la partie massive au déplacement oscillatoire du premier élément pour commander l'actionneur en générateur chargeant le moyen de stockage pendant une partie d'un cycle de fonctionnement de l'actionneur, la partie massive (13, 23) se déplaçant librement pendant une autre partie du cycle de fonctionnement de l'actionneur (11-12, 21-22).

**2.** - Procédé de génération d'énergie électrique au moyen d'un actionneur (11-12, 21-22) relié électriquement à un moyen de stockage d'énergie électrique (16, 26) et comportant un premier élément (11, 21) apte à être soumis à un déplacement à vitesse oscillatoire et un deuxième élément (12, 22) constituant au moins en partie une partie massive (13, 23) apte à osciller en vitesse par rapport au premier élément, **caractérisé en ce qu'**il comprend :

- un asservissement du déplacement de la partie massive au déplacement oscillatoire du premier élément pour commander l'actionneur en générateur chargeant le moyen de stockage pendant une partie d'un cycle de fonctionnement de l'actionneur,

- un asservissement du déplacement de la partie massive au déplacement oscillatoire du premier élément pour commander l'actionneur en moteur alimenté par le moyen de stockage pendant une autre partie du cycle de fonctionnement de l'actionneur (11-12, 21-22).

**3.** - Procédé conforme aux revendications 1 ou 2, selon lequel l'asservissement pour commander l'actionneur en générateur est relatif à la vitesse de déplacement de la partie massive asservie à l'accélération du premier élément.

**4.** - Procédé conforme à la revendication 2, selon lequel le cycle de fonctionnement de l'actionneur (11-12, 21-22) comprend une phase de fonctionnement (0-T/4) de l'actionneur (11-12, 21-22) en moteur pour augmenter la vitesse de déplacement de la partie massive suivant un sens prédéterminé pendant une augmentation de l'accélération du premier élément suivant un sens opposé au sens prédéterminé, une phase de fonctionnement (T/4-T/2) de l'actionneur en générateur pour diminuer la vitesse de déplacement de la partie massive suivant le sens prédéterminé pendant une diminution de l'accélération du premier élément suivant le sens opposé, une phase de fonctionnement (T/2-3T/4) de l'actionneur en moteur pour augmenter la vitesse de déplacement de la partie massive suivant le sens opposé pendant une augmentation de l'accélération du premier élément suivant le sens prédéterminé, et une phase de fonctionnement (3T/4-T) de l'actionneur en générateur pour diminuer la vitesse de déplacement de la partie massive suivant le sens opposé pendant une diminution de l'accélération du premier élément suivant le sens prédéterminé.

**5.** - Procédé conforme à la revendication 2, selon lequel le cycle de fonctionnement de l'actionneur (11-12, 21-22) comprend des phases de fonctionnement (∆T) de l'actionneur en moteur pour augmenter et diminuer la vitesse de déplacement de la partie massive lorsque l'accélération du premier élément varie autour d'un maximum.

**6.** - Dispositif de génération d'énergie électrique comprenant un actionneur (11-12, 21-22) relié électriquement à un moyen de stockage d'énergie électrique (16, 26) et comportant un premier élément (11, 21) apte à être soumis à un déplacement à vitesse oscillatoire et un deuxième élément (12, 22) constituant au moins en partie une partie massive (13, 23) apte à osciller en vitesse par rapport au premier élément, **caractérisé en ce qu'**il comprend un moyen d'asservissement (14, 24) pour commander l'actionneur en générateur chargeant le moyen de stockage, en asservissant le déplacement de la partie massive au déplacement oscillatoire du premier élément pendant une partie d'un cycle de fonctionnement de l'actionneur, et pour commander l'actionneur (11-12, 21-22) en moteur alimenté par le moyen de stockage (16, 26) pendant une autre partie du cycle de fonctionnement de l'actionneur.

**7.** - Dispositif conforme à la revendication 6, dans lequel le moyen d'asservissement (14, 24) comprend un moyen (142, 242) pour mesurer une accélération du premier élément (11, 21), un moyen (141, 241) pour mesurer une vitesse de déplacement de la partie massive, et un moyen (143, 144, 15, 16 ; 243, 244, 25, 26) commandant l'actionneur pour asservir la vitesse de déplacement de la partie massive à l'accélération du premier élément.

**8.** - Dispositif conforme à la revendication 7, dans lequel le moyen d'asservissement comprend un moyen (143, 144 ; 243, 244) pour corriger un paramètre dépendant de l'accélération mesurée du premier élément et de la vitesse de déplacement mesurée de la partie massive par rapport à une consigne variable dépendant de la position du premier élément, et un amplificateur-onduleur réversible (15, 25) pour adapter les variations de l'énergie électrique tantôt à récupérer de l'actionneur et tantôt à fournir à l'actionneur aux courant et tension continues aux bornes du moyen de stockage (16, 26) selon le paramètre corrigé.

**9.** - Dispositif conforme à la revendication 6, dans lequel le déplacement de la partie massive (23) est rotatif et l'actionneur (21-22) est tournant.

**10.** - Dispositif conforme à la revendication 9, dans lequel le moyen d'asservissement est apte à faire varier la vitesse de déplacement de la partie massive (22, 23) autour d'une vitesse nominale plus élevée que la vitesse angulaire maximale du premier élément (21).

**11.** - Dispositif conforme à la revendication 10, comprenant un moyen (201) pour découpler en rotation un boîtier (20) supportant l'actionneur (21-22) du premier élément (21).

**12.** - Dispositif conforme à la revendication 6, comprenant un moyen élastique (17, 27) fixé à un boîtier (10, 20) supportant l'actionneur (11-12, 21-22) pour assister l'actionneur à accélérer la partie massive (13, 23) lorsque l'actionneur fonctionne en moteur.

**13.** - Dispositif conforme à la revendication 6, dans lequel la partie massive mobile (13, 23) comprend de manière amovible au moins une partie d'un terminal mobile relié au moyen de stockage (16, 26).

**Patentansprüche**

**1.** Verfahren zur Erzeugung von elektrischer Energie mit Hilfe eines Aktuators (11-12, 21-22), der elektrisch an ein Mittel zur Speicherung von elektrischer Energie (16, 26) angeschlossen ist, und umfassend ein erstes Element (11, 21), das geeignet ist, einer Bewegung mit Schwingungsgeschwindigkeit unterzogen zu werden, und ein zweites Element (12, 22), das zumindest teilweise ein massives Teil (13, 23) darstellt, das geeignet ist, in Bezug zum ersten Element in Geschwindigkeit zu schwingen, **dadurch gekennzeichnet, dass** es eine Steuerung der Bewegung des massiven Teils bei der Schwingungsbewegung des ersten Elements umfasst, um den Aktuator als Generator zu steuern, der das Speichermittel während eines Teils eines Funktionszyklus des Aktuators auflädt, wobei sich das massive Teil (13, 23) frei während eines weiteren Teils des Funktionszyklus des Aktuators (11-12, 21-22) bewegt.

**2.** Verfahren zur Erzeugung von elektrischer Energie mit Hilfe eines Aktuators (11-12, 21-22), der elektrisch an ein Mittel zur Speicherung von elektrischer Energie (16, 26) angeschlossen ist, und umfassend ein erstes Element (11, 21), das geeignet ist, einer Bewegung mit Schwingungsgeschwindigkeit unterzogen zu werden, und ein zweites Element (12, 22), das zumindest teilweise ein massives Teil (13, 23) darstellt, das geeignet ist, in Bezug zum ersten Element in Geschwindigkeit zu schwingen, **dadurch gekennzeichnet, dass** es umfasst:

- eine Steuerung der Bewegung des massiven Teils bei der Schwingungsbewegung des ersten Elements, um den Aktuator als Generator zu steuern, der das Speichermittel während eines Teils eines Funktionszyklus des Aktuators auflädt,
- eine Steuerung der Bewegung des massiven Teils bei der Schwingungsbewegung des ersten Elements, um den Aktuator als Motor zu steuern, der von dem Speichermittel während eines weiteren Teils des Funktionszyklus des Aktuators (11-12, 21-22) versorgt wird.

**3.** Verfahren nach den Ansprüchen 1 oder 2, bei dem sich die Steuerung, um den Aktuator als Generator zu steuern, auf die Bewegungsgeschwindigkeit des massiven Teils, das bei der Beschleunigung des ersten Elements gesteuert wird, bezieht.

**4.** Verfahren nach Anspruch 2, bei dem der Funktionszyklus des Aktuators (11-12, 21-22) eine Funktionsphase (0-T/4) des Aktuators (11-12, 21-22) als Motor, um die Bewegungsgeschwindigkeit des massiven Teils in eine vorbestimmte Richtung während einer Erhöhung der Beschleunigung des ersten Elements in eine zur vorbestimmten Richtung entgegengesetzte Richtung zu erhöhen, eine Funktionsphase (T/4-T/2) des Aktuators als Generator, um die Bewegungsgeschwindigkeit des massiven Teils in die vorbestimmte Richtung während einer Verringerung der Beschleunigung des ersten Elements in die entgegengesetzte Richtung zu verringern, eine Funktionsphase (T/2-3T/4) des Aktuators als Motor, um die Bewegungsgeschwindigkeit des massiven Teils in die entgegengesetzte Richtung während einer Erhöhung der Beschleunigung des ersten Elements in die vorbestimmte Richtung zu erhöhen, und eine Funktionsphase (3T/4-T) des Aktuators als Generator umfasst, um die Bewegungsgeschwindigkeit des massiven Teils in die entgegengesetzte Richtung während einer Verringerung der Beschleunigung des ersten Elements in die vorbestimmte Richtung zu verringern.

**5.** Verfahren nach Anspruch 2, bei dem der Funktionszyklus des Aktuators (11-12, 21-22) Funktionsphasen ($\Delta T$) des Aktuators als Motor umfasst, um die Bewegungsgeschwindigkeit des massiven Teils zu erhöhen und zu verringern, wenn die Beschleunigung des ersten Elements um ein Maximum variiert.

**6.** Vorrichtung zur Erzeugung von elektrischer Energie, umfassend einen Aktuator (11-12, 21-22), der elektrisch an ein Mittel zur Speicherung von elektrischer Energie (16, 26) angeschlossen ist, und umfassend ein erstes Element (11, 21), das geeignet ist, einer Bewegung mit Schwingungsgeschwindigkeit unterzogen zu werden, und ein zweites Element (12, 22), das zumindest teilweise ein massives Teil (13, 23) darstellt, das geeignet ist, in Bezug zum ersten Element in Geschwindigkeit zu schwingen, **dadurch gekennzeichnet, dass** sie ein Steuerungsmittel (14, 24) zur Steuerung des Aktuators als Generator, der das Speichermittel auflädt, wobei die Bewegung des massiven Teils während der Schwingungsbewegung des ersten Elements während eines Teils eines Funktionszyklus des Aktuators gesteuert wird, und zur Steuerung des Aktuators (11-12, 21-22) als Motor umfasst, der von dem Speichermittel (16, 26) während eines weiteren Teils des Funktionszyklus des Aktuators versorgt wird.

**7.** Vorrichtung nach Anspruch 6, bei der das Steuerungsmittel (14, 24) ein Mittel (142, 242) zum Messen einer Beschleunigung des ersten Elements (11, 21), ein Mittel (141, 241) zum Messen einer Bewegungsgeschwindigkeit des massiven Teils, und ein Mittel (143, 144, 15, 16; 243, 244, 25, 26) umfasst, das den Aktuator steuert, um die Bewegungsgeschwindigkeit des massiven Teils bei der Beschleunigung des ersten Elements zu steuern.

**8.** Vorrichtung nach Anspruch 7, bei der das Steuerungsmittel ein Mittel (143, 144; 243, 244), um einen Parameter, der von der gemessenen Beschleunigung des ersten Elements und der gemessenen Bewegungsgeschwindigkeit des massiven Teils in Bezug zu einem variablen Sollwert abhängt, der von der Position des ersten Elements abhängt, zu korrigieren, und einen reversiblen Verstärker-Wechselrichter (15, 25) umfasst, um die Variationen der elektrischen Energie, die sowohl vom Aktuator zu gewinnen, als auch an den Aktuator zu liefern ist, mit Gleichstrom und -spannung an den Klemmen des Speichermittels (16, 26) gemäß dem korrigierten Parameter anzupassen.

**9.** Vorrichtung nach Anspruch 6, bei der die Bewegung des massiven Teils (23) rotierend ist, und der Aktuator (21-22) drehend ist.

**10.** Vorrichtung nach Anspruch 9, bei der das Steuerungsmittel geeignet ist, die Bewegungsgeschwindigkeit des massiven Teils (22, 23) um eine höhere Nominalgeschwindigkeit als die maximale Winkelgeschwindigkeit des ersten Elements (21) zu variieren.

**11.** Vorrichtung nach Anspruch 10, umfassend ein Mittel (201), um ein Gehäuse (20), das den Aktuator (21-22) des ersten Elements (21) trägt, in Drehung zu entkoppeln.

**12.** Vorrichtung nach Anspruch 6, umfassend ein elastisches Mittel (17, 27), das an einem Gehäuse (10, 20), das den Aktuator (11-12, 21-22) trägt, befestigt ist, um den Aktuator bei der Beschleunigung des massiven Teils (13, 23) zu unterstützen, wenn der Aktuator als Motor funktioniert.

**13.** Vorrichtung nach Anspruch 6, bei der das bewegliche massive Teil (13, 23) auf abnehmbare Weise mindestens einen Teil eines mobilen Endgeräts umfasst, das mit dem Speichermittel (16, 26) verbunden ist.

**Claims**

**1.** Method for generating electric energy by means of an actuator (11-12, 21-22) electrically connected to an electric energy storage means (16, 26) and comprising a first element (11, 21) able to be subjected to a displacement at oscillating speed and a second element (12, 22) forming at least partly a solid part (13, 23) able to oscillate at speed relative to the first element, **characterized in that** it comprises control of the displacement of the solid part depending on the oscillating displacement of the first element so as to operate the actuator as a generator charging the storage means during one part of an operating cycle of the actuator, the solid part (13, 23) being displaced freely during another part of the operating cycle of the actuator (11-12, 21-22).

**2.** Method for generating electric energy by means of an actuator (11-12, 21-22) electrically connected to an electric energy storage means (16, 26) and comprising a first element (11, 21) able to be subjected to a displacement at oscillating speed and a second element (12, 22) forming at least partly a solid part (13, 23) able to oscillate at speed relative to the first element, **characterized in that** it comprises:

- control of the displacement of the solid part depending on the oscillating displacement of the first element so as to operate the actuator as a generator charging the storage means during one part of an operating cycle of the actuator,
- control of the displacement of the solid part depending on the oscillating displacement of the first element so as to operate the actuator as a motor powered by the storage means during another part of the operating cycle of the actuator (11-12, 21-22).

**3.** Method according to Claims 1 or 2, whereby the control for operating the actuator as a generator relates to the speed of displacement of the solid part which is controlled depending on the acceleration of the first element.

**4.** Method according to Claim 2, whereby the operating cycle of the actuator (11-12, 21-22) comprises an operating phase (0-T/4) of the actuator (11-12, 21-22) as a motor for increasing the speed of displacement of the solid part in a predetermined direction during an increase in the acceleration of the first element in an opposite direction to the predetermined direction, an operating phase (T/4-T/2) of the actuator as a generator for decreasing the speed of displacement of the solid part in the predetermined direction during a decrease of the acceleration of the first element in the opposite direction, an operating phase (T/2-3T/4) of the actuator as a motor for increasing the speed of displacement of the solid part in the opposite direction during an increase of the acceleration of the first element in the predetermined direction, and an operating phase (3T/4-T) of the actuator as a generator for decreasing the speed of displacement of the solid part in the opposite direction during a decrease of the acceleration of the first element in the predetermined direction.

5. Method according to Claim 2, whereby the operating cycle of the actuator (11-12, 21-22) comprises operating phases (ΔT) of the actuator as a motor for increasing and decreasing the speed of displacement of the solid part when the acceleration of the first element varies about a maximum value.

6. Device for generating electric energy comprising an actuator (11-12, 21-22) electrically connected to an electric energy storage means (16, 26) and comprising a first element (11, 21) able to be subjected to a displacement at oscillating speed and a second element (12, 22) forming at least partly a solid part (13, 23) able to oscillate at speed relative to the first element, **characterized in that** it comprises a control means (14, 24) for operating the actuator as a generator charging the storage means, by controlling the displacement of the solid part depending on the oscillating displacement of the first element during a part of an operating cycle of the actuator, and so as to operate the actuator (11-12, 21-22) as a motor powered by the storage means (16, 26) during another part of the operating cycle of the actuator.

7. Device according to Claim 6, wherein the control means (14, 24) comprises a means (142, 242) for measuring an acceleration of the first element (11, 21), a means (141, 241) for measuring a speed of displacement of the solid part, and a means (143, 144, 15, 16; 243, 244, 25, 26) operating the actuator so as to control the speed of displacement of the solid part depending on the acceleration of the first element.

8. Device according to Claim 7, wherein the control means comprises a means (143, 144; 243, 244) for correcting a parameter dependant on the measured acceleration of the first element and the measured speed of displacement of the solid part in relation to a variable set value dependent on the position of the first element, and a reversible amplifier/inverter (15, 25) for adapting the variations of the electric energy, both for recovery from the actuator and for supply to the actuator, to the direct current and voltages at the terminals of the storage means (16, 26) based on the corrected parameter.

9. Device according to Claim 6, wherein the displacement of the solid part (23) is rotational and the actuator (21-22) is revolving.

10. Device according to Claim 9, wherein the control means is designed to vary the speed of displacement of the solid part (22, 23) at a nominal speed higher than the maximum angular speed of the first element (21).

11. Device according to Claim 10, comprising a means (201) for rotationally decoupling a housing (20) supporting the actuator (21-22) from the first element (21).

12. Device according to Claim 6, comprising a resilient means (17, 27) fixed to a housing (10, 20) supporting the actuator (11-12, 21-22) for helping the actuator to accelerate the solid part (13, 23) when the actuator operates as a motor.

13. Device according to Claim 6, wherein the movable solid part (13, 23) comprises removably at least one part of a mobile terminal connected to the storage means (16, 26).

# FIG. 1

# FIG. 2

# FIG. 3

# FIG. 4

# FIG. 5

# FIG. 6

# FIG. 7

# FIG. 8

# FIG. 9

# FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030020281 A1

- US 20040222708 A1

**Littérature non-brevet citée dans la description**

- **M. RUELLAN ; S. TURRI ; HAMID BEN AHMED ; B. MULTON.** Electromagnetic resonant generator. IEEE IAS annual meeting, 02 Octobre 2005